# EUROPEAN PATENT APPLICATION

(11) **EP 1 202 200 A2**
(43) Date of publication of application: **02.05.2002**
(21) Application number: 01122650.3
(22) Date of filing: 27.09.2001
(51) Int. Cl.: G06F 17/60

(54) **Method and system for marketing and/or shopping**

(30) Priority: 24.10.2000 US 695590
(71) Applicant: SYMBOL TECHNOLOGIES, INC., Holtsville, New York 11742-1300 (US)
(72) Inventor: Goldman, Ron, Cold Spring Harbor, NY 11724 (US); Hamilton, Alistair, Stony Brook, NY 11790 (US)
(74) Representative: Geyer, Ulrich F., Dr. Dipl.-Phys.

(57) **Abstract**

A method of marketing wherein a plurality of customers in a plurality of stores use wireless bar code reading terminals for reading bar codes related to products in the stores.

## Description

### BACKGROUND OF THE INVENTION

The present invention relates to methods and systems for marketing and/or shopping using wireless barcode reading terminals to read barcodes related to products in stores and for providing services to a shopper in response to the reading of barcodes.

### SUMMARY OF THE INVENTION

In one embodiment of the present invention, there are a plurality of stores and all of the stores are connected to the database of a product manager, such as the owner of a product or the distributor of a product. The product manager generates coupons upon the scanning of the product manager's product or a related product by a terminal in one of the stores. For example, if a can of Coke is scanned and the customer, based upon data in the database is found to be a regular customer of Coke, a coupon may be issued to that customer for a six pack of Coke. If the customer is found to be normally a Pepsi purchaser, a different coupon, for example for a case of Coke, may be provided. Thus, in accordance with the invention, the coupon-that is provided to a customer is dynamically changed based upon prior shopping behavior.

The dynamic change can be the change in the amount of the coupon, the time that the coupon is issued for, that is, instead of being issued for use immediately, it may be issued for use in the next shopping trip and would be a so-called future coupon. In accordance with another embodiment of the present invention, the coupon is targeted based upon the behavior of the customer. For example, the customer may be a frequent purchaser of a particular product, the customer may have once used a product but now is using a competitive product, the customer has never used the product before and the characteristics of the coupon will be dependent upon the behavior of the customer's shopping habits.

In a further embodiment of the present invention, in addition to or instead of issuing coupons, a consumer using the wireless barcode reading terminal can get "frequent scanner miles" or scanning points equivalent to electronic green stamps based upon the scanning of barcodes associated with products in the store and/or the purchase of scanned products. The customer would accumulate these scanning points in an account kept in a database of the store or in a central location outside of the store. The customer can get a catalog on the display of the wireless barcode reading terminal and be informed regularly of the different thresholds of points and the prizes associated with each threshold.

In a further embodiment of the present invention, the customer is induced to use the wireless barcode reading terminal by being offered future coupons for the next shopping trip, in addition to or instead of coupons issued for the present shopping trip or so-called present coupons and/or the scanning points.

In accordance with a preferred embodiment of the present invention, the wireless handheld computer having the barcode reading capability communicates via a local area network in a store using spread spectrum communication protocols.

In accordance with another embodiment of the present invention, the store can maintain a database and receive the scans of a customer. In this embodiment, the store can designate one or more products for which the scanning by a customer will result in the customer receiving a prize. The prize can be present coupons, future coupons, scanning points or other prizes. The consumer, upon scanning the given or preselected item in the store, would receive the prize. The prize can be indicated to the user on the display of the wireless terminal.

In accordance with another embodiment of the present invention, the wireless terminal has a display which includes a meter which displays at least one and preferably all three of the accounts of the user indicating the number and amounts of present coupons, the number and amounts of future coupons and the number of scanning points in the customer's account.

In a further embodiment of the present invention, proximity coupons can be generated based upon the scanning of a barcode of an associated product by the customer with the wireless barcode reading terminal. In this example, the customer may scan the label of one brand of hotdog, and the computer will indicate that the store is having a promotion on a different brand of hotdog and that a coupon is available for that other brand of hotdog. Alternatively, the scanning of the hotdog barcode will have the system indicate to the customer that a coupon is now available for hotdog rolls or mustard. These coupons would be dynamically generated based upon the scanning of barcodes by a customer.

In a further embodiment of the present invention, the coupons generated within a store and which are redeemed by the store to either the manufacturer or the product distributor. When the store redeems these coupons with the product manager, in accordance with the invention, the payment for the coupon to the store is based upon the anonymity or identification of the customer and facts about the customer to the product manager. For example, the fee to the coupon provider can be based upon the level of identification. When a customer checks out a store terminal, the customer can either provide identification based upon an identification number card or the like, or the customer can use the card without identifying himself or herself. When the user provides identification, the store can then use the database to find out the user's shopping habits and this data, tailored for the particular coupon provider, may be useful in aiding the provider in supplying this product and other products to the store. Thus, the amount of identification information would provide a basis for the amount paid to the store for the coupon.

In accordance with a further embodiment of the present invention, the terminals can be provided in a kiosk or other station, preferably at the front door or entry area of a store. The customer would pick up a terminal and at that point, either provide identification in the form of a card with a barcode that can be scanned by the barcode reader on the terminal, or the customer can choose to not provide identification. In one embodiment of the present invention, the terminals have rechargeable batteries and are recharged in the kiosk awaiting use by customers. Preferably, the charged terminals are unlocked and can be removed by a new customer, and the uncharged terminals are locked and cannot be taken until they are fully charged or charged sufficiently so that they can be used in the store for a typical shopping trip.

In order to prevent the theft or inadvertent taking of the terminals from a store, the terminals preferably include an electronic activation surveillance device that beeps when the unit leaves a store. In accordance with another embodiment of the present invention, where the system utilizes a wireless communication protocol, such as Spectrum 24, the unit will start emitting a loud buzzing or beeping noise when the terminal no longer senses the Spectrum 24 network.

As noted above, after a customer removes a terminal from the kiosk, the user can then scan an identification card. If the user does not scan an identification card, the user cannot get any current or future coupons in the user's account, nor can the user obtain the current account for scanning points. If the user does provide identification, then one or more of these accounts will be provided to the user and can be accessed during the shopping trip.

In accordance-with the invention, the barcode reading wireless terminal can be used to scan paper coupons in the store so that the user need not present the coupons at the checkout counter. Moreover, the user can scan instore flyers that have coupons with associated barcodes so that the user need not carry the flyers around during the shopping trip or have to cut the coupons out of the flyers.

In accordance with the method and system of the present invention, at checkout, the user can scan a barcode dedicated to the register at which the customer is checking out, and the terminal will dump all of the coupons stored by the user for the products to be purchased as the operator scans the various items that are to be purchased.

In an alternative embodiment, the checkout counter can have a cradle for receiving the wireless terminal, and the terminal will feed the coupons into a computer which will then printout the coupons that have been stored in the terminal for use at the checkout register.

In an alternative embodiment of the present invention, the user can return the terminal to the kiosk prior to checkout and get a coupon list or printout of coupons at that time for use at the checkout counter.

In accordance with the present invention, when the consumer returns to the store, the coupons and/or frequent scanning points will be in the consumer's account. The consumer always has the option of cashing out the coupons and scanning points or letting them accumulate in the account. The system can print a voucher, for example, for the frequent scanning points, and the consumer can use the voucher that day for redeeming the voucher for prizes associated with the threshold that the user has reached. Moreover, the store or the manager of the points can provide lookups on the World Wide Web for the catalog of prizes and provide access by the customer to the account of the customer setting forth how many points and/or coupons are in the customer's account.

The system according to the present invention also allows users with their own personal terminals to preload shopping lists and coupons in the terminal by using the barcode reader and then either downloading that information to the system when the customer reaches the store or by using the terminal in the store's system if it is compatible.

In accordance with the present invention, the method and system contemplate the terminals being put back into the terminal station or kiosk in order to get coupons, having portable printout units at the checkout counter so that the user can scan a barcode on the printer and then communicate the coupons to the printer and have the printer print them out or supply the coupons to a register via a server. Alternatively, the cash register at the checkout counter can be hooked up to a scanner, as in the conventional systems used in most stores, and the system can use a scanner wedge to allow scans from the terminal to be received at the cash register as if the barcode data was coming from the other scanner. Preferably, the scanner wedge is able to receive data from the terminal via the wireless communication protocol of the terminal, for example, Spectrum 24.

In accordance with the present invention, the scanner wedge would have a barcode associated with it that would be read by the barcode reader in the terminal, so as to associate the terminal with the scanner connected to the wedge.

In a further embodiment of the present invention, the kiosk or terminal station would have a printer associated with it. As-terminals are returned to the kiosk or station, data relating to coupons redeemed by customers will be received, and the information relating to those coupons will be consolidated so that consolidated and/or sorted sheets of coupons will be printed out for redeeming by the store to the product managers. The coupons that are printed out are sorted by product, vendor, and/or where the coupons are to be sent to. Moreover, the printer can print the coupons in the format desired by the product manager for redeeming.

In accordance with a further embodiment of the present invention, the coupons that are dynamically generated by the system can be based upon the location of the store, the type of store, the time of year, the time of day, the day of the week, the month of the year and/or whether the terminal is a fixed terminal or a roaming terminal. Moreover, the dynamically generated coupons can be based upon the terminals IP address or whether a UPC code is read by the terminal, as opposed to a different kind of code.

Another aspect of the present invention is that the system can be used in a store having a point of sales system, so as to be independent of the point of sales system. In this case, the coupons are generated independently of the point of sales systems and are delivered, so as to not impact the point of sales system that is already in the store.

Accordingly, the coupon system would include a remote coupon database that is not part of the point of sales database and would distribute coupons to the point of sales system through the cash register. In accordance with the invention, a user can bring in coupons and scan them with the terminal and then throw the coupons out. The coupons can be printed out later with the printout organized, as noted hereinabove. The system can be interactive, that is increase the coupon value dynamically based upon the user's shopping habits and/or other factors as noted above.

The wireless barcode reading terminal can be a wireless personal digital assistant with a barcode reader, either within it or connected via a module or the like, it can be a cellular phone with an associated barcode reader, or it can be other kinds of portable handheld terminals with barcode readers, such as those described in U.S. Patents 5,923,735, 5,979,753 and 6,084,528, the disclosures of which are hereby incorporated by reference.

The wireless LAN systems, which are preferably useable herein, are, for example, those disclosed in the aforementioned U.S. Patents.

The present invention is described in more detail with reference to the attached drawings wherein:

### BRIEF DESCRIPTION OF THE DRAWINGS

Fig. 1 is a block diagram of a marketing system according to the present invention;
Fig. 2 is a block diagram of an in-store marketing system according to one embodiment of the present invention;
Fig. 3 is a block diagram of a terminal for use in the methods and systems according to the present invention;
Fig. 4 is a terminal station in accordance with methods and systems according to the present invention;
Fig. 5 is a block diagram showing the scanner wedge in accordance with the present invention; and
Fig. 6 is a block diagram of a system in accordance with the present invention for processing coupons.

These and other features of the present invention will become more apparent from the following detailed description of the invention taken with the attached drawings.

### DETAILED DESCRIPTION OF THE INVENTION

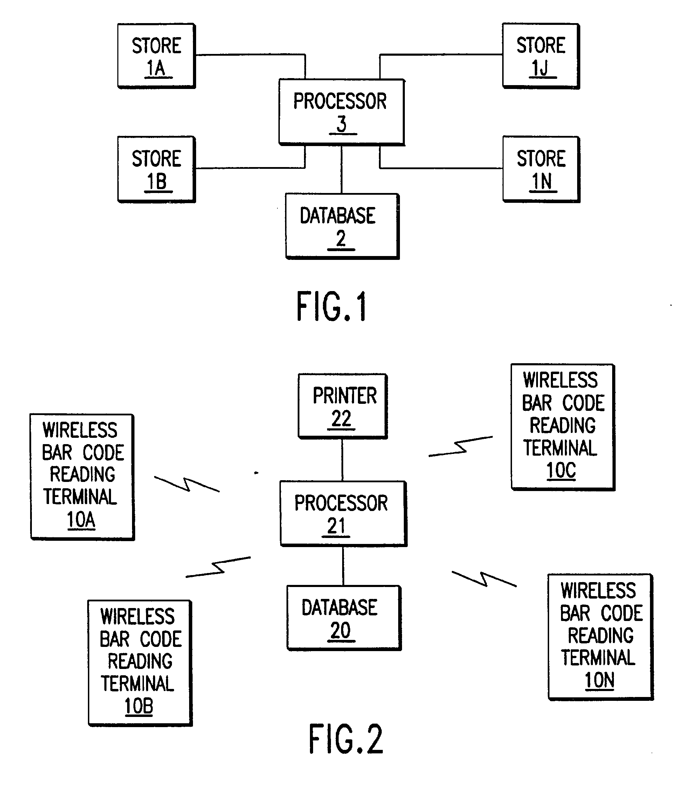

A system for carrying out methods of marketing in accordance with the present invention is shown in Figs. 1 and 2. As shown therein, a plurality of stores 1A-1N are connected to the processor 3 of a product manager, such as a manufacturer or distributor, for a particular product or line of products or brands. The product manager maintains a database 2 that receives data from each of the stores 1A-1N relating to a plurality of customers using terminals in that store. Fig. 2 shows a system that is in place in a store which includes a plurality of wireless terminals 10A-10N that each have barcode reading capability and which communicate using a wireless communications protocol with a processor 11 in the store that maintains a database 20 of shopping behavior relating to the customer and a database of coupon and other information, as will be described hereinafter.

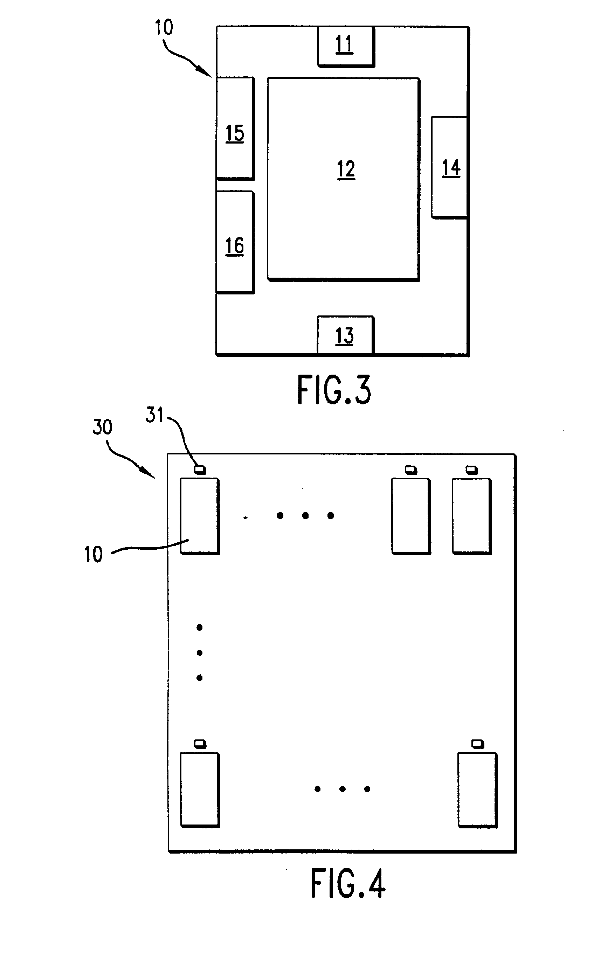

Each terminal 10, as shown in Fig. 3, has a barcode reader 11, preferably comprising a scan engine which can be a laser based barcode scanner, a CCD barcode reader or any other conventional barcode reading apparatus. The device further comprises a display 12 and rechargeable batteries 13. The terminal has a wireless transceiver 14. The wireless protocol is preferably a spread spectrum communication protocol and most preferably the Spectrum 24 protocol of Symbol Technologies.

Fig. 4 shows a terminal station 30 which has a plurality of terminals 10 mounted thereon. A locking mechanism 31 is provided which is controlled by the processor 11 to allow terminals to be removed or not depending on certain criteria.

Referring to Figs. 1-4, the system allows for the plurality of wireless barcode reading terminals to read barcodes relating to products in each of the stores. The databases 2 and/or 20 store data relating to shopping behavior for a plurality of customers. The processor 3 on a multi-store basis or the processor 11 on a store-by-store basis provides a product coupon to a customer in response to the reading of a barcode by the customer with one of the wireless barcode reading terminals. The processors dynamically change a characteristic of a product coupon based upon whether or not the customer is in database 2 or database 20.

Moreover, the product provider processor 3 receives data from the central processor 11 of the in-store system relating to coupons that are to be redeemed based upon customer usage. The processor 3 can determine the amount to be redeemed to the store for each coupon, based upon the level of identification of the customer receiving the coupon.

The terminal 10 also has a memory 15 for storing shopping lists and coupons. Shopping lists can either be entered by reading barcodes on products or by entering the information via a keyboard, such as a touch screen keyboard on display 12. Coupons can be entered by reading the barcodes on the coupons.

In accordance with the present invention, database 2 and/or database 20 can store information relating to scanning point accounts for a plurality of customers. The processor associated with-the database assigns scanning points to a customer in response to either the scanning of the barcode or by scanning the barcode and purchasing the scanned product.

The processor 11 allows the customer to cash out the scanning point account in response to a request by the customer. The cashing out is preferably accomplished by printing a voucher on printer 22.

Processor 11 preferably also assigns a prize to at least one product in the database 20 and provides the prize to the_customer in response to, for example, the reading of a barcode by the customer associated with the product. The prize can be a coupon and/or scanning points. The prize can be added to the account of the customer and indicated on the terminal or it can be printed on printer 12.

The database 20 and/or the database 2 can also store customer accounts relating to present coupons that are available for redeeming during the current shopping trip or future coupons which would be redeemable at future shopping trips. The display on the terminal can display an indication of the status of the customer's account with regard to these kinds of coupons and/or the scanning points. The processors can also record the identity of coupons delivered to a terminal and the number thereof in the accounts.

The terminal station 30 can preferably be placed at the entrance of a store. The terminal station charges the batteries of the terminals when they are mounted as shown in Fig. 4, and the locking mechanism 31 permits charged terminals to be removed for use by customers and prevents uncharged terminals from being removed by customers under the control of the processor 11.

The processor 11 also receives customer identification information read by the terminals 10A-10N when a customer reads the barcode on an identification card of the customer. The processor can then look up customer identification data in the database 20 relating to the shopping behavior of the customer and/or the account information of the customer relating to coupons and scanning points.

The terminals 10 may also include an electronically activated surveillance circuit 16 which emits an audible alarm when the terminal leaves the store or can emit an alarm when the terminal no longer senses the communication protocol, such as Spectrum 24.

The shopping system according to the present invention can interface with the point of sale system that is in a store or can act independently of the system, so as to be added on and used with an existing point of sale system without causing any downtime to the system.

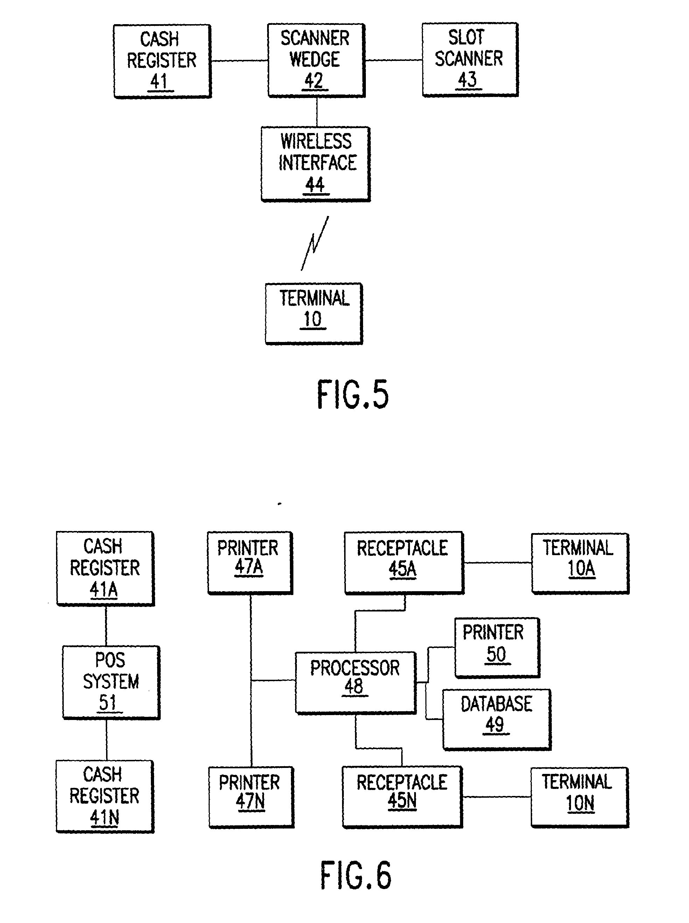

For example, as shown in Fig. 6, the terminal can be placed in a receptacle either near a cash register 41A-41N or at the terminal station 30. The receptacle 45A-45N can be a cradle for holding the terminal or can merely be a device for wirelessly receiving data from the terminal. Preferably, the terminal first reads a barcode associated with a cash register prior to transferring data, so that the processor 48 can associate the terminal with a cash register and print coupon data for the customer at printers 47A-47N associated with cash registers 41A-41N.

Alternatively, data can be sent directly to the cash register using a scanner wedge 42 shown in Fig. 5 that is hardwired to the cash register 41 and to a slot scanner 43 which is conventionally situated at the cash register and has a wireless interface 44 for receiving data from a terminal 10. In this instance, the terminal 10 would first read a barcode associated with the scanner 43, so that the scanner wedge would associate data from the terminal with the scanner 43. The cash register 41 would not realize that data is coming from the terminal 10 instead of the slot scanner 43, since the scanner wedge would allow the terminal 10 to emulate the slot scanner 43 as far as the cash register 41 was concerned. While a slot scanner 43 is shown in this example, it is clear that any kind of scanner used at conventional check out counters could be used.

The system according to Fig. 6 also has a database 49 associated with it where data relating to coupons received from the various terminals can be maintained. Database 49 can thus be independent of the database of the point of sales system 51 which is connected to each of the cash registers and which allows barcode data received from the scanner associated with the cash register to look up data on the point of sale database.

Processor 48 is also connected to a printer 50 which allows the processor to print out batches of coupons associated with barcode data from the terminals on a periodic basis. For example, the printer can print out coupons on a daily basis with the coupons sorted based upon product type or product manager or the location to which the coupons are to be sent.

It is understood that the embodiments described hereinabove are merely illustrative and are not intended to limit the scope of the invention. It is realized that various changes, alterations, rearrangements and modifications can be made by those skilled in the art without substantially departing from the spirit and scope of the present invention.

### Summary of the invention

1. A method of marketing wherein a plurality of customers in a plurality of stores use wireless bar code reading terminals for reading bar codes related to products in the stores, the method comprising the steps of:
   maintaining at least one database relating to shopping behavior for a plurality of customers; and
   providing a product coupon to a customer in response to the reading of a bar code by the customer with one of the wireless bar code reading terminals by dynamically changing a characteristic of the product coupon based upon whether or not the customer is in the at least one database.
2. The method wherein, if the customer is therein, the dynamically determined characteristic of the coupon is based upon at least one entry in the at least one database.
3. The method wherein the at least one characteristic is the amount of the coupon.
4. The method wherein the at least one characteristic is the product for which the coupon is provided.
5. The method wherein the product is a product in proximity to the product associated with a read bar code.
6. The method wherein the step of providing includes providing a coupon to the customer for the next shopping trip.
7. The method wherein the at least one characteristic of the coupon is based upon whether or not the customer is identified and the level of identification.
8. The method wherein the at least one characteristic is the amount of the coupon.
9. The method further comprising paying a fee to a store by a product provider for each coupon provided by the store for products of the product provider.
10. The method wherein the fee is based upon the level of identification of the customer receiving the coupon.
11. The method further comprising storing a shopping list and coupons on a terminal prior to entering a store.
12. The method wherein the coupons are stored by reading bar codes thereon.
13. A system for marketing comprising:
   a plurality of wireless bar code reading terminals for reading bar codes related to products in the stores;
   at least one database relating to shopping behavior for a plurality of customers; and
   a processor for providing a product coupon to a customer in response to the reading of a bar code by the customer with one of the wireless bar code reading terminals by dynamically changing a characteristic of the product coupon based upon whether or not the customer is in the at least one database.
14. The system wherein, if the customer is in the at least one database, the dynamically determined characteristic of the coupon is based upon at least one entry in the at least one database.
15. The system wherein the at least one characteristic is the amount of the coupon.
16. The system wherein the at least one characteristic is the product for which the coupon is provided.
17. The system wherein the product is a product in proximity to the product associated with a scanned bar code.
18. The system wherein a coupon is provided to the customer for the next shopping trip.
19. The system wherein the at least one characteristic of the coupon is based upon whether or not the customer is identified and the level of identification.
20. The system wherein the at least one characteristic is the amount of the coupon.
21. The system further comprising a product provider processor for paying a fee to a store by a product provider for each coupon provided by the store for products of the product provider.
22. The system wherein the fee is based upon the level of identification of the customer receiving the coupon.
23. The system wherein the terminal has a memory for storing a shopping list and coupons.
24. The system wherein the coupons are stored by reading bar codes thereon.
25. A method of marketing wherein a plurality of customers in a plurality of stores use wireless bar code reading terminals to read bar codes related to products in the stores, the method comprising the steps of:
   maintaining at least one database relating to scanning point accounts for a plurality of customers; and
   assigning scanning points to a customer in response to at least the reading of a bar code by the customer with one of the wireless bar code reading terminals and adding the scanning points to the scanning point account of the customer in the at least one database.
26. The method wherein the scanning points are added in response to reading of a bar code and the purchase of the item represented by the bar code.
27. The method further comprising cashing out the customer's scanning point account.
28. The method wherein the step of cashing out the scanning point account comprises printing a voucher.
29. The method further comprising providing access to the database by a customer over the Internet.
30. A system for marketing comprising:
   a plurality of wireless bar code reading terminals to read bar codes related to products in the stores;
   at least one database relating to scanning point accounts for a plurality of customers; and
   a processor for assigning scanning points to a customer in response to at least the reading of a bar code by the customer with one of the wireless bar code reading terminals and adding the scanning points to the scanning point account of the customer in the at least one database.
31. The system wherein the scanning points are added in response to reading of a bar code and the purchase of the item represented by the bar code.
32. The system wherein the processor cashes out the customer's scanning point account in response to a request by the customer.
33. The system wherein the processor cashes out the scanning point account and effects the printing of a voucher.
34. The system further comprising a server for providing access to the database by a customer over the Internet.
35. A method of marketing wherein a plurality of customers in a plurality of stores use wireless bar code reading terminals to read bar codes related to products in the stores, the method comprising the steps of:
   maintaining at least one database relating to the products; and
   assigning a prize to at least one product in the database;
   providing the prize to a customer in response to at least the reading of a bar code by the customer associated with the at least one product.
36. The method wherein the prize is a coupon.
37. The method wherein the prize is scanning points added to an account of the customer.
38. A system for marketing comprising:
   a plurality of wireless bar code reading terminals for reading bar codes related to products in stores;
   at least one database relating to the products; and
   a processor for assigning a prize to at least one product in the database and providing the prize to a customer in response to at least the reading of a bar code by the customer associated with the at least one product.
39. The system wherein the prize is a coupon.
40. The system wherein the prize is scanning points added to an account of the customer.
41. A method of marketing wherein a plurality of customers in a plurality of stores use wireless bar code reading terminals to read bar codes related to products in the stores, the method comprising the steps of:
   maintaining at least one database of customer accounts having information related to at least one of present customer coupons, future customer coupons and present customer scanning points; and
   displaying on the customer's terminal an indication of the status of the customer's account.
42. The method wherein the account has information relating to at least two of present customer coupons, future customer coupons and present customer scanning points.
43. The method wherein the account has information relating to all three of present customer coupons, future customer coupons and present customer scanning points.
44. A system for marketing comprising:
   a plurality of wireless bar code reading terminals to read bar codes related to products in stores;
   at least one database of customer accounts having information related to at least one of present customer coupons, future customer coupons and present customer scanning points; and
   a display on the customer's terminal for displaying an indication of the status of the customer's account.
45. The system wherein the account has information relating to at least two of present customer coupons, future customer coupons and present customer scanning points.
46. The system wherein the account has information relating to all three of present customer coupons, future customer coupons and present customer scanning points.
47. A message delivery system having a product information distribution system for transmitting at least one coupon to a selected portable terminal having a bar code reader upon the reading by the bar code reader of a bar code associated with a product and comprising a processor for recording the identity of coupons delivered to the selected terminal and the number thereof.
48. A shopping method comprising the steps of:
   providing a terminal station at the entrance of a store having a plurality of wireless bar code reading terminals having rechargeable batteries therein, wherein the terminals are mounted for removal by a customer;
   charging the batteries of the terminals at the terminal station when mounted; and
   permitting charged terminals to be removed for use by customers and preventing uncharged terminals from being removed by customers.
49. The method further comprising entering the identification of the customer by reading a customer card bar code with a removed terminal.
50. The method further comprising a database of customers and shopping information relating thereto including at least one of current coupons, future coupons and scanning points.
51. The method further comprising informing the customer of the status of at least one of current coupons, future coupons and scanning points.
52. The method further comprising providing coupons to the customer based upon bar codes read by the terminal.
53. The method further comprising providing future coupons to the customer based upon bar codes read by the terminal.
54. The method further comprising providing scanning points to the customer based upon bar codes read by the customer.
55. The method further comprising indicating when a terminal leaves the store by emitting an audible signal.
56. The method wherein the terminal includes an electronically activated surveillance circuit causing a beep when the terminal leaves the store.
57. The method wherein the terminals communicate using Spectrum 24 and wherein the terminal emits an audible alarm when the terminal no longer senses Spectrum 24.
58. A shopping system comprising:
   a terminal station at the entrance of a store having a plurality of wireless bar code reading terminals having rechargeable batteries therein, wherein the terminals are mounted for removal by a customer;
   a circuit for charging the batteries of the terminals at the terminal station when mounted; and
   a locking system for permitting charged terminals to be removed for use by customers and preventing uncharged terminals from being removed by customers.
59. The system wherein the terminals enter the identification of the customer by reading a customer card bar code upon removal.
60. The system further comprising a database of customers and shopping information relating thereto including at least one of current coupons, future coupons and scanning points.
61. The system further comprising a processor for informing the customer of the status of at least one of current coupons, future coupons and scanning points.
62. The system wherein the processor provides coupons to the customer based upon bar codes read by the terminal.
63. The system wherein the processor provides future coupons to the customer based upon bar codes read by the terminal.
64. The system wherein the processor provides scanning points to the customer based upon bar codes read by the customer.
65. The system further comprising a circuit for indicating when a terminal leaves the store by emitting an audible signal.
66. The system wherein the terminal includes an electronically activated surveillance circuit causing a beep when the terminal leaves the store.
67. The system wherein the terminals communicate using Spectrum 24 and wherein the terminal emits an audible alarm when the terminal no longer senses Spectrum 24.
68. A shopping method comprising the steps of:
   scanning bar codes associated with products with a wireless bar code reading terminal in a store and storing data relating to product coupons at the terminal;
   reading a bar code associated with a register; and
   downloading the data relating to the coupons to the register.
69. A shopping system comprising:
   a plurality of wireless bar code reading terminals in a store and each having a memory for storing data relating to product coupons for bar codes read on associated products;
   a bar code associated with a register for reading by a terminal; and
   a processor for downloading the data relating to the coupons to the register.
70. A shopping method comprising the steps of:
   scanning bar codes associated with products with a wireless bar code reading terminal in a store and storing data relating to product coupons in the terminal;
   placing the terminal in a receptacle when finished shopping; and
   printing out product coupons corresponding to the data in the terminal.
71. The method wherein the receptacle is at a checkout register.
72. The method further comprising providing a terminal station at the entrance of a store for a plurality of the wireless bar code reading terminals, wherein each terminal is mounted in the receptacle for removal and replacement by a customer.
73. A shopping system comprising:
   a plurality of wireless bar code reading terminals for reading bar codes associated with coupons and products and storing bar code data relating thereto in the terminal;
   a plurality of cash registers each having a bar code scanner connected thereto for inputting bar codes associated with products to be purchased and bar codes relating to coupons; and
   a scanner wedge connected to each bar code scanner for receiving bar code data from the terminal and inputting same into the cash register, wherein the scanner wedge and terminal have a wireless communication interface.
74. The system wherein the wireless communication protocol is Spectrum 24.
75. A shopping method comprising the steps of:
   providing a terminal station in a store having a plurality of wireless bar code reading terminals, wherein each terminal is mounted for removal and replacement by a customer;
   receiving bar code data from the terminals associated with coupons and products in a bar code data database; and
   printing out batches of coupons associated with the bar code data from the terminals on a periodic basis.
76. The method wherein the batches comprise consolidated sheets of coupons.
77. The method wherein the batches comprise sorted sheets of coupons.
78. The method , wherein the batches are printed daily.
79. The method wherein the printing out is performed at the terminal station.
80. A shopping system comprising:
   a terminal station in a store having a plurality of wireless bar code reading terminals, wherein each terminal is mounted for removal and replacement by a customer;
   a bar code data database for receiving bar code data from the terminals associated with coupons and products; and
   a printer for printing out batches of coupons associated with the bar code data from the terminals on a periodic basis.
81. The system wherein the batches comprise consolidated sheets of coupons.
82. The system wherein the batches comprise sorted sheets of coupons.
83. The system wherein the batches are printed daily.
84. The system wherein the printing out is performed at the terminal station.
85. A method of marketing wherein a plurality of customers in a plurality of stores use wireless scanning terminals to read bar codes related to products in the stores, the method comprising the steps of:
   maintaining at least one database relating to coupons for products; and
   providing a product coupon to a customer in response to the reading of a bar code by the customer with one of the wireless scanning terminals by dynamically changing a the amount of the product coupon.
86. The method wherein the amount of the coupon is based upon the location of the store.
87. The method wherein the amount of the coupon is based upon the type of store.
88. The method wherein the amount of the coupon is based upon the time of year.
89. The method wherein the amount of the coupon is based upon the time of day.
90. The method wherein the amount of the coupon is based upon the day of the week.
91. The method wherein the amount of the coupon is based upon the month of the year.
92. The method wherein the amount of the coupon is based upon the type of terminal.
93. The method wherein the amount of the coupon is-based upon the terminal IP address.
94. The method wherein the amount of the coupon is based upon a UPC bar code being read.
95. A system for marketing comprising:
   a plurality of wireless scanning terminals to read bar codes related to products in stores;
   at least one database relating to coupons for products; and
   a processor for providing a product coupon to a customer in response to the reading of a bar code by the customer with one of the wireless scanning terminals by dynamically changing a the amount of the product coupon.
96. The system wherein the amount of the coupon is based upon the location of the store.
97. The system wherein the amount of the coupon is based upon the type of store.
98. The system wherein the amount of the coupon is based upon the time of year.
99. The system wherein the amount of the coupon is based upon the time of day.
100. The system wherein the amount of the coupon is based upon the day of the week.
101. The system wherein the amount of the coupon is based upon the month of the year.
102. The system wherein the amount of the coupon is based upon the type of terminal.
103. The system wherein the amount of the coupon is based upon the terminal IP address.
104. The system wherein the amount of the coupon is based upon a UPC bar code being read.
105. A shopping method in a store having a point of sale system including bar code scanners, cash registers and a product database, the method comprising the steps of:
   providing a terminal station in a store having a plurality of wireless bar code reading terminals, wherein each terminal is mounted for removal and replacement by a customer;
   receiving bar code data from the terminals associated with coupons in a coupon database; and
   printing out coupons associated with the bar code data from the terminals independent of the point of sale system.
106. The method wherein the coupon database is independent of the product database.
107. A shopping system in a store having a point of sale system including bar code scanners, cash registers and a product database, comprising:
   a terminal station in the store having a plurality of wireless bar code reading terminals, wherein each terminal is mounted for removal and replacement by a customer;
   a coupon database for receiving bar code data from the terminals; and
   a printer for printing out coupons associated with the bar code data from the terminals independent of the point of sale system.
108. The system wherein the coupon database is independent of the product database.

## Claims

1. A method of marketing wherein a plurality of customers in a plurality of stores use wireless bar code reading terminals for reading bar codes related to products in the stores, the method comprising the steps of:
maintaining at least one database relating to shopping behavior for a plurality of customers; and
providing a product coupon to a customer in response to the reading of a bar code by the customer with one of the wireless bar code reading terminals by dynamically changing a characteristic of the product coupon based upon whether or not the customer is in the at least one database.

2. The method according to claim 1, wherein, if the customer is therein, the dynamically determined characteristic of the coupon is based upon at least one entry in the at least one database,
and/ or wherein preferably the product is a product in proximity to the product associated with a read bar code,
and/ or wherein preferably the step of providing includes providing a coupon to the customer for the next shopping trip,
and/ or further preferably comprising paying a fee to a store by a product provider for each coupon provided by the store for products of the product provider;
and/ or further preferably comprising storing a shopping list and coupons on a terminal prior to entering a store.

3. A system for marketing comprising:
a plurality of wireless bar code reading terminals for reading bar codes related to products in the stores;
at least one database relating to shopping behavior for a plurality of customers; and
a processor for providing a product coupon to a customer in response to the reading of a bar code by the customer with one of the wireless bar code reading terminals by dynamically changing a characteristic of the product coupon based upon whether or not the customer is in the at least one database.

4. The system or method according to any of the preceding claims, wherein, if the customer is in the at least one database, the dynamically determined characteristic of the coupon is based upon at least one entry in the at least one database,
and/ or wherein preferably the at least one characteristic is the amount of the coupon,
and/ or wherein preferably the at least one characteristic is the product for which the coupon is provided,
and/ or wherein preferably the product is a product in proximity to the product associated with a scanned bar code,
and/ or wherein preferably a coupon is provided to the customer for the next shopping trip.

5. The system or method according to any of the preceding claims, wherein the at least one characteristic of the coupon is based upon whether or not the customer is identified and the level of identification,
and/ or wherein preferably the at least one characteristic is the amount of the coupon,
and/ or further preferably comprising a product provider processor for paying a fee to a store by a product provider for each coupon provided by the store for products of the product provider,
and/ or wherein preferably the fee is based upon the level of identification of the customer receiving the coupon,
and/ or wherein preferably the terminal has a memory for storing a shopping list and coupons,
and/ or wherein preferably the coupons are stored by reading bar codes thereon.

6. A method of marketing wherein a plurality of customers in a plurality of stores use wireless bar code reading terminals to read bar codes related to products in the stores, the method comprising the steps of:
maintaining at least one database relating to scanning point accounts for a plurality of customers; and
assigning scanning points to a customer in response to at least the reading of a bar code by the customer with one of the wireless bar code reading terminals and adding the scanning points to the scanning point account of the customer in the at least one database.

7. The method according to any of the preceding claims, further comprising cashing out the customer's scanning point account,
and/ or wherein preferably the step of cashing out the scanning point account comprises printing a voucher,
and/ or further preferably comprising providing access to the database by a customer over the Internet.

8. A system for marketing comprising:
a plurality of wireless bar code reading terminals to read bar codes related to products in the stores;
at least one database relating to scanning point accounts for a plurality of customers; and
a processor for assigning scanning points to a customer in response to at least the reading of a bar code by the customer with one of the wireless bar code reading terminals and adding the scanning points to the scanning point account of the customer in the at least one database.

9. The system or method according to any of the preceding claims, wherein the scanning points are added in response to reading of a bar code and the purchase of the item represented by the bar code,
and/ or wherein preferably the processor cashes out the customer's scanning point account in response to a request by the customer,
and/ or wherein preferably the processor cashes out the scanning point account and effects the printing of a voucher,
and/ or further preferably comprising a server for providing access to the database by a customer over the Internet.

10. A method of marketing wherein a plurality of customers in a plurality of stores use wireless bar code reading terminals to read bar codes related to products in the stores, the method comprising the steps of:
maintaining at least one database relating to the products; and
assigning a prize to at least one product in the database;
providing the prize to a customer in response to at least the reading of a bar code by the customer associated with the at least one product.

11. A system for marketing comprising:
a plurality of wireless bar code reading terminals for reading bar codes related to products in stores;
at least one database relating to the products; and
a processor for assigning a prize to at least one product in the database and providing the prize to a customer in response to at least the reading of a bar code by the customer associated with the at least one product.

12. The system or method according to any of the preceding claims, wherein the prize is a coupon,
and/ or wherein preferably the prize is scanning points added to an account of the customer.

13. A method of marketing wherein a plurality of customers in a plurality of stores use wireless bar code reading terminals to read bar codes related to products in the stores, the method comprising the steps of:
maintaining at least one database of customer accounts having information related to at least one of present customer coupons, future customer coupons and present customer scanning points; and
displaying on the customer's terminal an indication of the status of the customer's account.

14. A system for marketing comprising:
a plurality of wireless bar code reading terminals to read bar codes related to products in stores;
at least one database of customer accounts having information related to at least one of present customer coupons, future customer coupons and present customer scanning points; and
a display on the customer's terminal for displaying an indication of the status of the customer's account.

15. The system or method according to any of the preceding claims, wherein the account has information relating to at least two of present customer coupons, future customer coupons and present customer scanning points,
and/ or wherein preferably the account has information relating to all three of present customer coupons, future customer coupons and present customer scanning points.

16. A message delivery system having a product information distribution system for transmitting at least one coupon to a selected portable terminal having a bar code reader upon the reading by the bar code reader of a bar code associated with a product and comprising a processor for recording the identity of coupons delivered to the selected terminal and the number thereof.

17. A shopping method comprising the steps of:
providing a terminal station at the entrance of a store having a plurality of wireless bar code reading terminals having rechargeable batteries therein, wherein the terminals are mounted for removal by a customer;
charging the batteries of the terminals at the terminal station when mounted; and
permitting charged terminals to be removed for use by customers and preventing uncharged terminals from being removed by customers.

18. The method according to any of the preceding claims, further comprising entering the identification of the customer by reading a customer card bar code with a removed terminal,
and/ or further preferably comprising informing the customer of the status of at least one of current coupons, future coupons and scanning points,
and/ or further preferably comprising providing coupons to the customer based upon bar codes read by the terminal,
and/ or further preferably comprising providing future coupons to the customer based upon bar codes read by the terminal,
and/ or further preferably comprising providing scanning points to the customer based upon bar codes read by the customer,
and/ or further preferably comprising indicating when a terminal leaves the store by emitting an audible signal.

19. A shopping system comprising:
a terminal station at the entrance of a store having a plurality of wireless bar code reading terminals having rechargeable batteries therein, wherein the terminals are mounted for removal by a customer;
a circuit for charging the batteries of the terminals at the terminal station when mounted; and
a locking system for permitting charged terminals to be removed for use by customers and preventing uncharged terminals from being removed by customers.

20. The system or method according to any of the preceding claims, wherein the terminals enter the identification of the customer by reading a customer card bar code upon removal,
and/ or further preferably comprising a database of customers and shopping information relating thereto including at least on of current coupons, future coupons and scanning points,
and/ or further preferably comprising a processor for informing the customer of the status of at least one of current coupons, future coupons and scanning points,
and/ or wherein preferably the processor provides coupons to the customer based upon bar codes read by the terminal,
and/ or wherein preferably the processor provides future coupons to the customer based upon bar codes read by the terminal.

21. The system or method according to any of the preceding claims, wherein the processor provides scanning points to the customer based upon bar codes read by the customer,
and/ or further preferably comprising a circuit for indicating when a terminal leaves the store by emitting an audible signal,
and/ or wherein preferably the terminal includes an electronically activated surveillance circuit causing a beep when the terminal leaves the store,
and/ or wherein preferably the terminals communicate using Spectrum 24 and wherein the terminal emits an audible alarm when the terminal no longer senses Spectrum 24.

22. A shopping method comprising the steps of :
scanning bar codes associated with products with a wireless bar code reading terminal in a store and storing data relating to product coupons at the terminal;
reading a bar code associated with a register; and
downloading the data relating to the coupons to the register.

23. A shopping system comprising:
a plurality of wireless bar code reading terminals in a store and each having a memory for storing data relating to product coupons for bar codes read on associated products;
a bar code associated with a register for reading by a terminal; and
a processor for downloading the data relating to the coupons to the register.

24. A shopping method comprising the steps of:
scanning bar codes associated with products with a wireless bar code reading terminal in a store and storing data relating to product coupons in the terminal;
placing the terminal in a receptacle when finished shopping; and
printing out product coupons corresponding to the data in the terminal.

25. The method according to any of the preceding claims, wherein the receptacle is at a checkout register,
and/ or further preferably comprising providing a terminal station at the entrance of a store for a plurality of the wireless bar code reading terminals, wherein each terminal is mounted in the receptacle for removal and replacement by a customer.

26. A shopping system comprising:
a plurality of wireless bar code reading terminals for reading bar codes associated with coupons and products and storing bar code data relating thereto in the terminal;
a plurality of cash registers each having a bar code scanner connected thereto for inputting bar codes associated with products to be purchased and bar codes relating to coupons; and
a scanner wedge connected to each bar code scanner for receiving bar code data from the terminals and inputting same into the cash register, wherein the scanner wedge and terminal have a wireless communication interface.

27. The system according to claim 26, wherein the wireless communication protocol is Spectrum 24.

28. A shopping method comprising steps of:
providing a terminal station in a store having a plurality of wireless bar code reading terminals, wherein each terminal is mounted for removal and replacement by a customer;
receiving bar code data from the terminals associated with coupons and products in a bar code data database; and
printing out batches of coupons associated with the bar code data from the terminals on a periodic basis.

29. A shopping system comprising:
a terminal station in a store having a plurality of wireless bar code reading terminals, wherein each terminal is mounted for removal and replacement by a customer;
a bar code data database for receiving bar code data from the terminals associated with coupons and products; and
a printer for printing out batches of coupons associated with the bar code data from the terminals on a periodic basis.

30. The system or method according to any of the preceding claims, wherein the batches comprise consolidated sheets of coupons,
and/ or wherein preferably the batches comprise sorted sheets of coupons,
and/ or wherein preferably the batches are printed daily,
and/ or wherein preferably the printing out is performed at the terminal station.

31. A method of marketing wherein a plurality of customers in a plurality of stores use wireless scanning terminals to read bar codes related to products in the stores, the method comprising the steps of:
maintaining at least one database relating to coupons for products; and
providing a product coupon to a customer in response to the reading of a bar code by the customer with one of the wireless scanning terminals by dynamically changing a the amount of the product coupon.

32. A system for marketing comprising:
a plurality of wireless scanning terminals to read bar codes related to products in stores;
at least one database relating to coupons for products; and
a processor for providing a product coupon to a customer in response to the reading of a bar code by the customer with one of the wireless scanning terminals by dynamically changing a the amount of the product coupon.

33. The system or method according to any of the preceding claims, wherein the amount of the coupon is based upon the location of the store,
and/ or wherein preferably the amount of the coupon is based upon the type of store,
and/ or wherein preferably the amount of the coupon is based upon the time of year,
and/ or wherein preferably the amount of the coupon is based upon the time of day,
and/ or wherein preferably the amount of the coupon is based upon the day of the week.

34. The system or method according to any of the preceding claims, wherein the amount of the coupon is based upon the month of the year,
and/ or wherein preferably the amount of the coupon is based upon the type of terminal,
and/ or wherein preferably the amount of the coupon is based upon the terminal IP address,
and/ or wherein preferably the amount of the coupon is based upon a UPC bar code being read.

35. A shopping method in a store having a point of sale system including bar code scanners, cash registers and a product database, the method comprising steps of:
providing a terminal station in a store having a plurality of wireless bar code reading terminals, wherein each terminal is mounted for removal and replacement by a customer;
receiving bar code data from terminals associated with coupons in a coupon database; and
printing out coupons associated with the bar code data from the terminals independent of the point of sale system.

36. A shopping system in a store having a point of sale system including bar code scanners, cash registers and a product database, comprising:
a terminal station in the store having a plurality of wireless bar code reading terminals, wherein each terminal is mounted for removal and replacement by a customer;
a coupon database for receiving bar code data from the terminals; and
a printer for printing out coupons associated with the bar code data from the terminals independent of the point of sale system.

37. The system or method according to any of the preceding claims, wherein the coupon database is independent of the product database.

38. A method of marketing wherein a plurality of customers in a plurality of stores use wireless bar code reading terminals for reading bar codes related to products in the stores, the method comprising the steps of:
maintaining at least one database relating to shopping behavior for a plurality of customers; and
providing a product coupon to a customer in response to the reading of a bar code by the customer.
